# EUROPÄISCHE PATENTSCHRIFT

(11) **EP 1 990 276 B1**
(45) Veröffentlichungstag und Bekanntmachung des Hinweises auf die Patenterteilung: **28.09.2016**
(21) Anmeldenummer: 08104311.9
(22) Anmeldetag: 27.03.2007
(51) Int. Cl.: G01N 3/20, G01N 3/24, B64F 5/00, G01M 5/00

(54) **Prüfvorrichtung für Rumpfschalen mit Schalenkopplern**
Testing device for rump lining with lining couplings
Dispositif de contrôle pour fuselages dotés de coupleurs de voiles

(43) Veröffentlichungstag der Anmeldung: 12.11.2008
(62) Teilanmeldung aus: 07722151.3
(73) Patentinhaber: IMA Materialforschung und Anwendungstechnik GmbH, 01109 Dresden (DE)
(72) Erfinder: Götze, Matthias, 01129, Dresden (DE); Best, Dr. Roald, 01309, Dresden (DE); Sachse, Mirko, 01129 Dresden (DE); Berthold, Dr. Udo, 01109, Dresden (DE); Grötzschel, Georg, 01139 Dresden (DE)
(74) Vertreter: Sperling, Thomas

(56) Entgegenhaltungen:
- EP-A- 1 683 721
- FR-A- 2 788 743
- SU-A1- 1 798 654
- US-A- 2 775 116
- US-A- 4 759 812
- US-A1- 2001 054 228
- AMBUR DAMODAR R ET AL: "Design and evaluation of composite fuselage panels subjected to combined loading conditions" JOURNAL OF AIRCRAFT, AIAA, RESTON, VA, US, Bd. 42, Nr. 4, 1. Januar 2005 (2005-01-01), Seiten 1037-1045, XP008082679 ISSN: 0021-8669

## Beschreibung

Die Erfindung betrifft eine Rumpfschalen Schubflussbeanspruchung Prüfvorrichtung und ist insbesondere zur dynamischen Rumpfschalenprüfung geeignet.

Unter einer Rumpfschale soll ganz allgemein ein flächiges Objekt verstanden werden, das mittels der Prüfvorrichtung mit verschiedenen Belastungen und Überlagerungen von Belastungen zum Zwecke der Prüfung der Bauteileigenschaften beaufschlagt wird. Dabei ist die Rumpfschale als Prüfling zumeist Teil eines komplexen Tragsystems, welches aufgrund seiner Größe, wie im Falle von Flugzeugrümpfen, nicht im Ganzen einer effizienten Prüfung auf seine Bauteileigenschaften unterzogen werden kann.

Derartige Prüfvorrichtungen dienen somit der Untersuchung von einzelnen Teilen, welche praxisnahen Beanspruchungen unterzogen werden müssen, um dabei die für Zulassungen oder Ähnliches erforderlichen Bauteileigenschaften erfolgreich nachzuweisen. Die Prüfvorrichtungen dienen darüber hinaus entwicklungsbegleitenden statischen und dynamischen Untersuchungen an beispielsweise Flugzeugrumpfschalen. Die Rumpfschalen werden beispielsweise aus Verbundwerkstoffen, insbesondere Faserverbundstrukturen, gefertigt. Unter Verbundwerkstoffen und insbesondere Faserverbundstrukturen werden beispielsweise Carbonfaserkunststoff CFK oder glasfaserverstärkter Kunststoff GFK aber auch GFK-Aluminiumverbunde verstanden.

Bei den Prüflingen handelt es sich regelmäßig um geometrisch, also konstruktiv, sowie werkstoffseitig anisotrope Flächentragwerke. Sie sind charakterisiert durch mehrachsige, linienhafte Schnittlastverläufe und daraus resultierenden mehrachsigen Beanspruchungszuständen. Um die Prüflinge praxisnahen Tests auszusetzen, sind mindestens drei Lastachsen zu untersuchen. Es handelt sich dabei um die Längsdehnung, die Umfangsdehnung und den Schubfluss. Außerdem werden lokale Einflüsse aus Innenüberdruck bei Flugzeugen nachgebildet, welche die Wirkung der Steifigkeitsverteilung der Rumpfstruktur beim Flug in großen Höhen widerspiegeln.

Auf dem Gebiet der Bauteilprüfvorrichtungen von Flugzeugrumpfschalen, im Folgenden als Rumpfschalen bezeichnet, sind verschiedene Konzepte bekannt.

Aus der US 2001/0054228 A1 ist ein Verfahren und eine Vorrichtung zur Herstellung eines dreidimensionalen Großbauteiles bekannt. Als dreidimensionale Großbauteile sind Flugzeugrümpfe offenbart, welche in ihrem vollständigen Querschnitt qualitätssichernden Prüfungen unterzogen werden.

Nach der DE 103 44 855 B4 ist beispielsweise eine Druck-Schubanlage zur Einleitung von hohen Schublasten bekannt, bei welcher die Druck- und Schublasten in gleicher Richtung wirken und über getrennte regelbare Elemente aufgebracht werden können. Nachteilig bei dieser Vorrichtung ist, dass eine flächige Luftdruckbelastung oder die alternative Zugkraftüberlagerung mit dieser Vorrichtung nicht realisierbar ist.

Im Stand der Technik sind Prüfvorrichtungen für Rumpfschalen bekannt, die eine Luftdruckbelastung der Rumpfschalen ermöglichen. So ist in der DE 197 027 754 A1 eine Vorrichtung zum Einspannen und Prüfen von Prüfkörpern, insbesondere von Flugzeug-Rumpfschalenteilen, bekannt. Dabei werden die Rumpfschalen verschiedenen dynamischen Belastungen gleichzeitig ausgesetzt. Insbesondere sind das eine Zugbelastung in Längsrichtung der Rumpfschale und eine flächige Luftdruckbelastung, die aufgrund einer Druckdifferenz zwischen dem Flugzeuginnenraum und der Außenumgebung entsteht.

Nachteilig bei diesen Prüfvorrichtungen ist, dass sie jede für sich Lastkombinationen ermöglichen, die erst in ihrer gemeinsamen Anwendung die separate Prüfung sämtlicher zylindrischer Rumpfbereiche in vollem Umfang, das heißt betriebslastennah, abdecken könnten. Dafür sind die vorgestellten Verfahren jedoch selbst mit Modifikationen physikalisch zu stark eingeschränkt.
Sekundär ist zu bemerken, dass die Vorrichtungen nach der DE 197 027 754 A1 im Überdrucklastfall ihrem Prinzip inhärent die Sektorsymmetrie nur fehlerhaft abbilden kann. Das heißt, es stellt sich eine für dünne Rumpfschalenhäute akzeptable Biegemomentverteilung ein.
Herkömmlich werden also Vorrichtungen eingesetzt, in denen die Rumpfschalen schwimmend gelagert untersucht werden, wobei oft eine stark wechselnde Verteilung der Beanspruchung als nachteilig zu verzeichnen ist. Darüber hinaus führt die getrennte Einleitung von Umfangs- und Schublasten zu einer Minderung der Qualität der Prüfung.
Somit sind insgesamt Schubflusstests nicht bzw. nur mangelhaft mit herkömmlichen mehrachsigen Prüfvorrichtungen auf der Basis von schwimmend gelagerten Schalen realisierbar und weiterhin sind Überlagerungen von Beanspruchungen gleichfalls nicht in ausreichendem Maße nachbildbar.

Aufbauend auf diesem Stand der Technik sind zur Überwindung der genannten Nachteile auch Prüfvorrichtungen bekannt, welche als so genannte D-Boxen in den Fachkreisen bezeichnet werden. In Ambur, D., Rouse, M.: Design and Evaluation of Composite Fuselage Panels Subjected to Combined Loading Conditions. In: Journal of Aircraft, Vol. 42, No. 4, July-August 2005 ist eine D-Box offenbart, die einen kreisbogensegmentförmigen Querschnitt für die Komplementärstruktur zeigt.
Die Ausgestaltung der D-Box mit kreisbogensegmentförmigem Querschnitt ist mit diversen Nachteilen verbunden. Insbesondere sind dabei zu nennen, dass eine vorzugsweise starre Kopplung zwischen Schale und Komplementärstruktur aufgrund der Steifigkeitsverhältnisse nicht ohne erhebliche Beanspruchungsstörungen anwendbar ist. Die Folge ist eine gelenkige Ausführung der Kanten am Längsrand. Dies wird mittels diskreten Scharnieren zwischen den einzelnen Balgen verwirklicht. Konsequenz ist eine umfangreiche Einschränkung der möglichen Prüfaufgaben, insbesondere hohe Schubbeanspruchung und Restfestigkeitsuntersuchungen im allgemeinen. Die Einschränkung ergibt sich durch die konstruktiv erzwungenen Beanspruchungskonzentrationen der diskreten Ausführung.
Die korrigierenden Maßnahmen in Sekantenrichtung des Ersatzquerschnitts lassen sich ausschließlich auf einen Arbeitspunkt der Lastzyklen einstellen - passive Spreizen.
Weiterhin nachteilig ist, dass die kreisbogensegmentförmige Gestaltung des Querschnitts der D-Box nach dem Stand der Technik zu einem erhöhten Platzbedarf führt. Es handelt sich bei der D-Box ganz allgemein um ein im Querschnitt D-förmiges Gebilde, bei dem der so genannte "Weiche Kasten" die ergänzende Struktur zur Rumpfschale bildet, die Komplementärstruktur. Die Rumpfschale wird zur Prüfung mechanisch diskret und gelenkig mit dem "Weichen Kasten" verbunden.

Weiterhin nachteilig ist jedoch, dass Verbundmaterialien nicht hinreichend sicher und verlässlich in Prüfvorrichtungen mit einem "Weichen Kasten" aus Metall untersucht werden können, da das Metall eine Fließgrenze aufweist, welche für Verbundmaterialien untypisch ist, was somit zum Nichterreichen des gewünschten Prüfbereichs führt. Ein weiterer Nachteil der bekannten Prüfvorrichtungen besteht darin, dass keine Spantkrafteinleitung möglich ist.

Aufgabe der vorliegenden Erfindung ist es, eine Rumpfschalen Schubflussbeanspruchung Prüfvorrichtung zur effizienten Prüfung von Schalenelementen zur Verfügung zu stellen, die die Messung von Schubflussbeanspruchungen sowie von Überlagerungen von mehreren Beanspruchungsarten praxisnah realisiert, wobei die Prüfvorrichtung auch kosteneffizient einsetzbar sein soll.

Die Aufgabe wird durch eine Rumpfschalen Schubflussbeanspruchung Prüfvorrichtung gemäß Patentanspruch 1 gelöst.

Nach einer nicht zur Erfindung gehörenden Ausgestaltung, die innerhalb der D-Box als Weicher Kasten bezeichnet wird, ist die Komplementärstruktur im Querschnitt U-förmig ausgebildet und besitzt an den Enden der Schenkel Auflagen in Längsrichtung der Komplementärstruktur - Längsflansche - mit Mitteln zur Fixierung der Rumpfschale an der Komplementärstruktur sowie zur Einleitung von Korrekturkräften und Übertragung von Prüfkräften. Die Mittel zur Fixierung der Rumpfschale zeichnen sich durch eine besondere Kombination von Form- und Kraftschluss, im Sinne des Austauschbaus/Prüflingswechsels, aus. Die Mittel zur Fixierung der Rumpfschale an der Komplementärstruktur sind zur Einleitung und Aufnahme von Prüfschnittkräften in Quer- und Längsrichtung ausgebildet.
An den Begrenzungen der Komplementärstruktur in Längsrichtung sind Querflansche angeordnet, welche der Einleitung und Aufnahme von Prüfkräften in Umfangsrichtung sowie von Hilfskräften in Längsrichtung dienen. Sie ermöglichen eine Belastung des Ersatzquerschnitts - Druckröhre - in sechs Freiheitsgraden. Die Komplementärstruktur ist als Weicher Kasten aus Verbundmaterialien ausgebildet, sprich sowohl geometrisch als auch werkstoffseitig anisotrop gestaltet, wodurch außerdem die unerwünschte Fließgrenze, wie sie bei Prüfvorrichtungen mit Komplementärstrukturen aus Metall auftritt, entfällt. Die Beanspruchungsgrenzen, speziell Bruchdehnungen, werden gezielt über denen der CFK-Prüflinge eingestellt.

Nach einer nicht zur Erfindung gehörenden Ausgestaltung ist die Komplementärstruktur aus glasfaserverstärktem Epoxidharz ausgebildet. Die Längsflansche an den Enden der Schenkel sind im Ausführungsbeispiel in einem Winkel α_{SW} = 22° zur Verbindungslinie zwischen den Schenkeln ausgebildet.

Allgemein gilt die Beziehung α_{SW} = α_{pü} - 0,5°, wobei der Index "SW" für Sandwich und "pü" für den mit Überdruck beaufschlagten Kreisausschnitt stehen.
Die Komplementärstruktur wird bevorzugt in Längsrichtung auf alternierend aneinander gereihten U-Profilen gebildet, so dass ein wellenartiger Längsschnitt entsteht. Die Materialdicke der Komplementärstruktur aus Verbundmaterialien beträgt für den ersten Prüfschalentyp - CFK-Sandwichschalen - bevorzugt 13,6 mm, wobei das Verbundmaterial der Komplementärstruktur aus bis zu 23 einzelnen Schichten aufgebaut ist.
Die Aufgabe der Erfindung wird dadurch gelöst, dass die Prüfvorrichtung für Rumpfschalen mit einer Komplementärstruktur derart ausgestaltet ist, dass sich der Ersatzquerschnitt aus N-Rumpfschalen mit N-Schalenkopplern definiert, wobei N ganzzahlig ist - Di-, Tri-, Tetra-Box.
Die Konzeption der Erfindung beruht darauf, einen Ersatzquerschnitt zu bilden, der aus mehreren Rumpfschalen und einer Komplementärstruktur besteht, wobei die Komplementärstruktur durch alle Elemente des Ersatzquerschnitts gebildet wird, die nicht Rumpfschalen sind. Der Ersatzquerschnitt selbst ist geschlossen, um einen Druckbehälter auszubilden.

Die Rumpfschalen Schubflussbeanspruchung Prüfvorrichtung besteht aus Schalenkopplern, Rumpfschalen, Mitteln zur Fixierung von Schalenkopplern und Rumpfschalen sowie Mitteln zur Korrekturkrafteinleitung, wobei die Rumpfschalen mit Mitteln zur Fixierung mit Schalenkopplern einen Ersatzquerschnitt für den Rumpf bildend verbunden sind und dass der Ersatzquerschnitt aus N-Rumpfschalen mit N-Schalenkopplern ausgebildet ist, wobei N ganzzahlig und größer als 1 ist.

Ein Vorteil der erfindungsgemäßen Konzeption besteht darin, dass eine Komplementärstruktur genutzt wird, die sich durch extrem richtungsabhängige mechanische Eigenschaften auszeichnet. Dies dient der Beherrschbarkeit der Dimensionen und somit der erreichbaren Versuchsqualität des umgebenden Prüfstandaufbaus. Gleichzeitig wird ihr gegenüber lokalen und globalen Dehnungen eine sehr hohe Widerstandsfähigkeit abverlangt. Die Übertragung bzw. Einleitung von Umfangsbruchlasten oder Schubbruchlasten sowie hoher überlagerter Anteile beider Komponenten mit Überlagerungen von ca. 75 % wird durch die erfindungsgemäße Vorrichtung ermöglicht. Gleichfalls ist eine lösbare Verbindung zwischen den Rumpfschalen und der Komplementärstruktur vorgesehen, was vorteilhaft zu einer Wiederverwendbarkeit der Komplementärstrukturen führt. Nach einer Ausgestaltung der Erfindung wird die Komplementärstruktur gegenüber eines Prüflings anteilig durch benachbarte Prüflinge
gebildet, was zu einer enormen Zeit- und Kosteneffizienz des Prüfverfahrens führt, da mit einem Prüfvorgang gleichzeitig mehrere Prüflinge getestet werden können. Die erfindungsgemäße Vorrichtung ist generell für die Prüfung von faserverstärkten Kunstoffen (FVK), wie GFK oder CFK, geeignet.

Durch die Schaffung eines Ersatzquerschnitts zur Reduzierung der benötigten Lasteinleitungen - im Vergleich zu schwimmend gelagerten Versuchsschalen - werden vielfältige Vorteile erzielt. Beispielsweise wird der Querschnitt gegenüber einer Rumpftonne erheblich verringert. Damit werden mit erfindungsgemäßen Vorrichtungen Prüfungen realisierbar, welche sonst infolge der Dimensionen und Größenordnungen der zu prüfenden Elemente nur mit extrem hohen Aufwendungen für den Prüfstand realisiert werden könnten.

Nach einer vorteilhaften Ausgestaltung der Erfindung besitzt die Komplementärstruktur-Schalenkoppler einen V-förmigen Querschnitt, der aus zwei geraden Schenkeln besteht, die durch eine Verrundung miteinander verbunden sind. Die Verrundung enthält Kontaktflächen zur Korrekturkrafteinleitung mittels Druckstücken.

Nach einer alternativen vorteilhaften Ausgestaltung der Erfindung besitzt der Komplementärstruktur-Schalenkoppler einen Y-förmigen Querschnitt, der aus zwei geraden Schenkeln besteht, die durch eine gemeinsame gerade Verlängerung miteinander verbunden sind. Die Verlängerung enthält Mittel zur diskreten Korrekturkrafteinleitung mittels Zuglaschen bzw. Zuganker.

Der Ersatzquerschnitt ist prinzipiell aus zwei, drei oder vier Rumpfschalen und Weichem Druckkasten, respektive der korrespondierenden Anzahl Schalenkopplern, definiert.

Die Mittel zur Fixierung der Rumpfschale an der Komplementärstruktur sind bevorzugt aus einer trichterförmigen Vertiefung und einer korrespondierend dazu ausgebildeten Einspannscheibe sowie aus Schrauben und Muttern ausgebildet, wobei an der der Rumpfschale zugewandten Oberseite der Einspannscheibe eine Riffelung aus Pyramidenstümpfen vorgesehen ist. Der Weiche Druckkasten oder die Schalenkoppler sind bevorzugt aus glasfaserverstärktem Epoxidharz ausgebildet und lassen sich für Bruchversuche an kohlefaserverstärkten Kunststoffen einsetzen.

Nach einer vorteilhaften Ausgestaltung lassen sich spantverstärkte Rumpfschalen mit erhöhter Genauigkeit prüfen, wenn eine passive oder aktive Spantspreize vorgesehen ist. Die Spantspreize verfügt über einen inneren und äußeren Schenkel - verbunden mit einem Längenausgleich, wobei die passive Spantspreize derart ausgebildet ist, dass die lokal exzentrische Tangentialkrafteinleitung ausgleichbar ist. Als Vorteil hervorzuheben ist, dass der relative Winkel zwischen den Spantköpfen unter Belastung der Rumpfschale annähernd konstant bleibt.
Eine aktive Spantspreize weist gleichfalls einen inneren und äußeren Schenkel - verbunden mit einem Längenausgleich - auf, wobei im Unterschied zur passiven Spantspreize der innere Schenkel über ein Gelenk mit dem Spantkopf verbunden ist und dass weiterhin ein Korrekturaktor am inneren Schenkel parallel angeordnet und mit der Kolbenstange über ein zweites Gelenk mit dem Spantkopf derart verbunden ist, dass die lokal exzentrische Tangentialkrafteinleitung durch die aktive Spantspreize ausgeglichen wird. Der relative Winkel zwischen den Spantköpfen bleibt unter Belastung der Rumpfschale konstant oder wird hyperkorrigiert. Entweder der Winkel oder das Biegemoment werden als Regelgröße genutzt und die jeweils abhängige Komponente stellt sich ein.

Die Vorteile der erfindungsgemäßen Vorrichtung sind folgendermaßen zusammenzufassen:
- Reduzierung der aktiven Lasteinleitung,
- kontinuierliche Randanbindung → bestmöglicher Kraftfluss,
- Austauschbau trotz starrer Anbindung der Prüflinge,
- Einsatz variabler Sandwichdicken der Prüflinge,
- Erhöhung der Versuchsfrequenz,
- optimierte Sektorsymmetrie unter Überdrucklast,
- Qualitätssteigerung der Beanspruchungsverteilung,
- passive Lasteinleitung für die Spante, d. h. Minderung der Regelfehler,
- Erfassung aller zylindrischen Rumpfabschnitte in der versuchstechnischen Simulation,
- geringerer Energiebedarf gegenüber Tonnenversuch,
- geringere Probenzahl bei gleichem Erkenntnisgewinn, verbunden mit weniger Abfall,
- schnellerer Erkenntnisgewinn, was zu geringerem Treibstoffverbrauch durch besser optimierte Rumpfschalen führt,
- Verkürzung des Gesamtentwicklungsprozesses, was zu einer verbesserten Wettbewerbsposition führt.

Besonders hervorzuheben ist, dass mit der erfindungsgemäßen Vorrichtung auch verteilte Belastungen im Test reproduzierbar angewendet werden können, wohingegen bei der D-Box nach dem Stand der Technik nur umlaufende gleichförmige Belastungen aufprägbar sind. Zudem wurden statische, Bauteil zerstörende Restfestigkeitsversuche für alle Lastkomponenten in den Leistungsbereich aufgenommen.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
- Fig. 1:: perspektivische Darstellung einer Komplementärstruktur in der Ausführungsform als Weicher Kasten;
- Fig. 2:: Vorderansicht einer Komplementärstruktur in der Ausführungsform als Weicher Kasten;
- Fig. 3:: schematischer Querschnitt eines Ersatzquerschnitts in der Ausführungsform als Di-Box;
- Fig. 4:: schematischer Querschnitt eines Ersatzquerschnitts in der Ausführungsform als Tri-Box;
- Fig. 5: Ausgestaltungen der Ersatzquerschnitte als a) Di-, b) Tri- und c) Tetra-Box mit Anordnung von Korrekturaktoren im Inneren der Struktur;
- Fig. 6 a:: Schalenkoppler als Zugplatte in Y-Form in perspektivischer Darstellung;

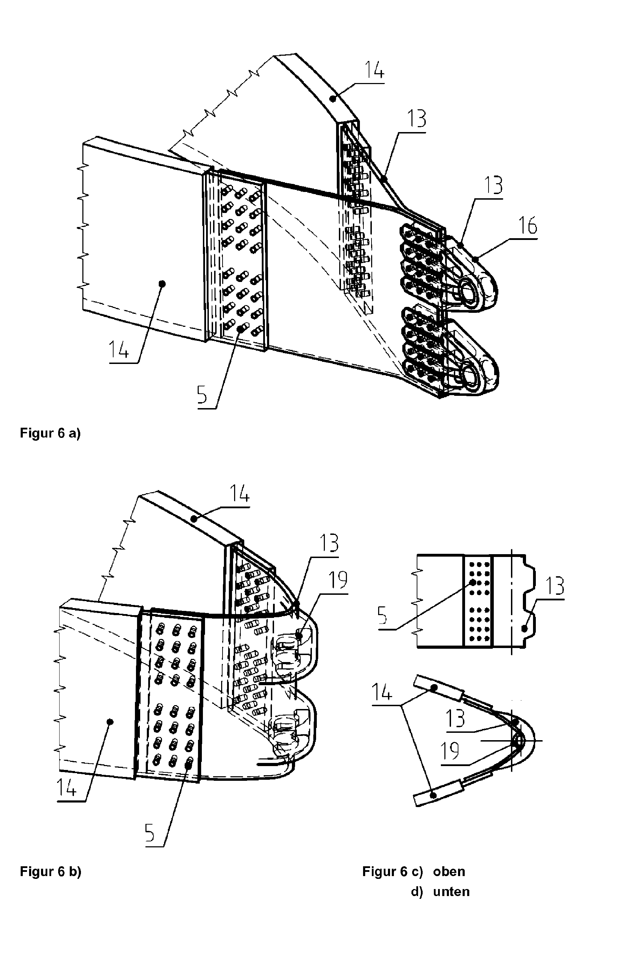

- Fig. 6 b:: Schalenkoppler als Zugplatte in V-Form in perspektivischer Darstellung;
- Fig. 6 c:: Schalenkoppler als Zugplatte in V-Form in Seitenansicht;
- Fig. 6 d:: Schalenkoppler als Zugplatte in V-Form in Draufsicht;

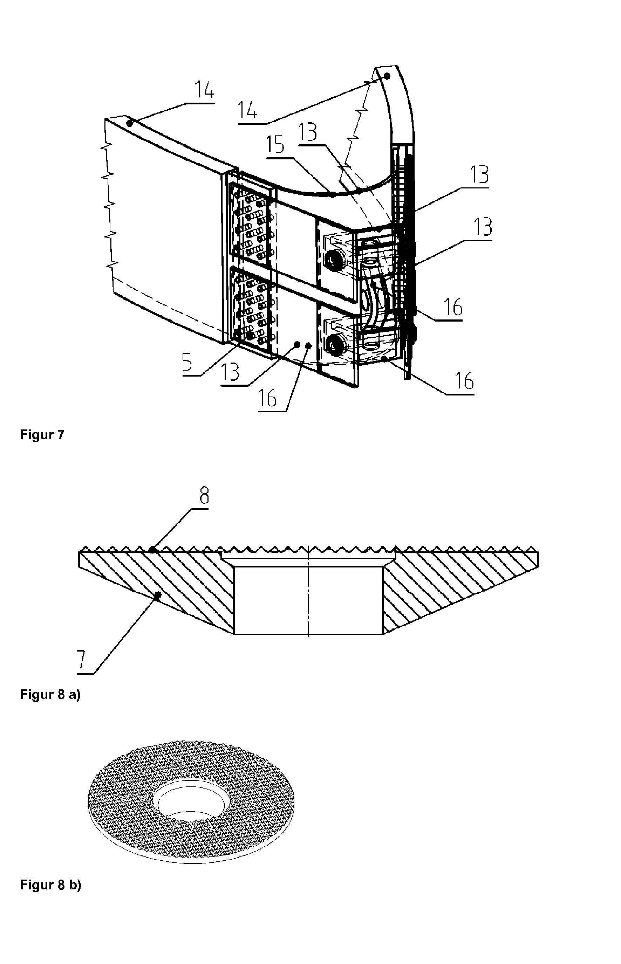

- Fig. 7:: Schalenkoppler als Membran mit Zuganker in perspektivischer Darstellung;

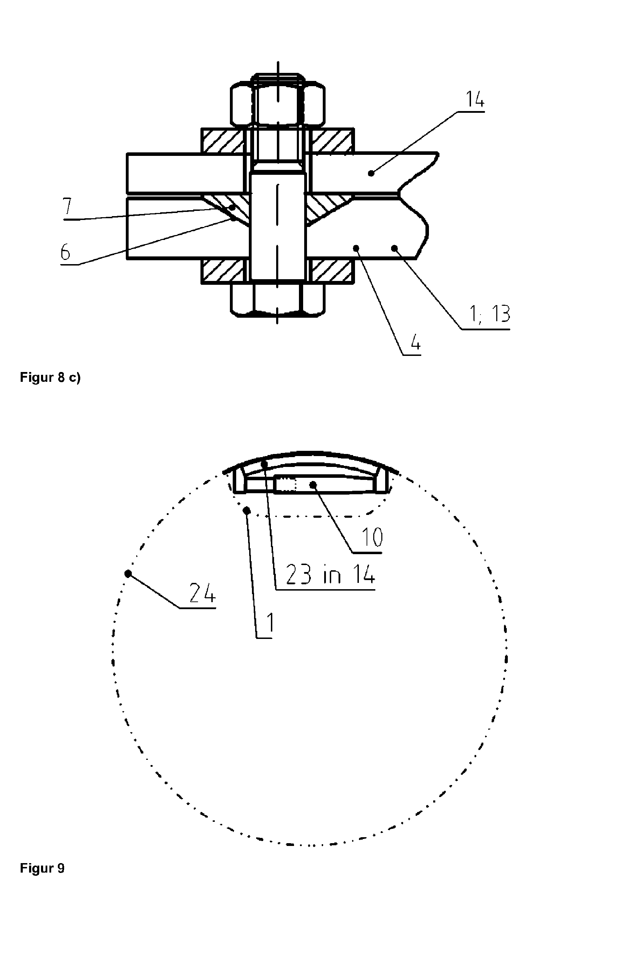

- Fig. 8 a:: Querschnittsdarstellung der Einspannscheibe;
- Fig. 8 b:: Einspannscheibe in perspektivischer Darstellung;
- Fig. 8 c:: Bohrbild der Verbindung von Weichem Kasten oder dem Schalenkoppler und der Rumpfschale mittels Einspannscheibe;
- Fig. 9:: passive Spantspreize im System des Rumpftonnen- und Ersatzquerschnitts;

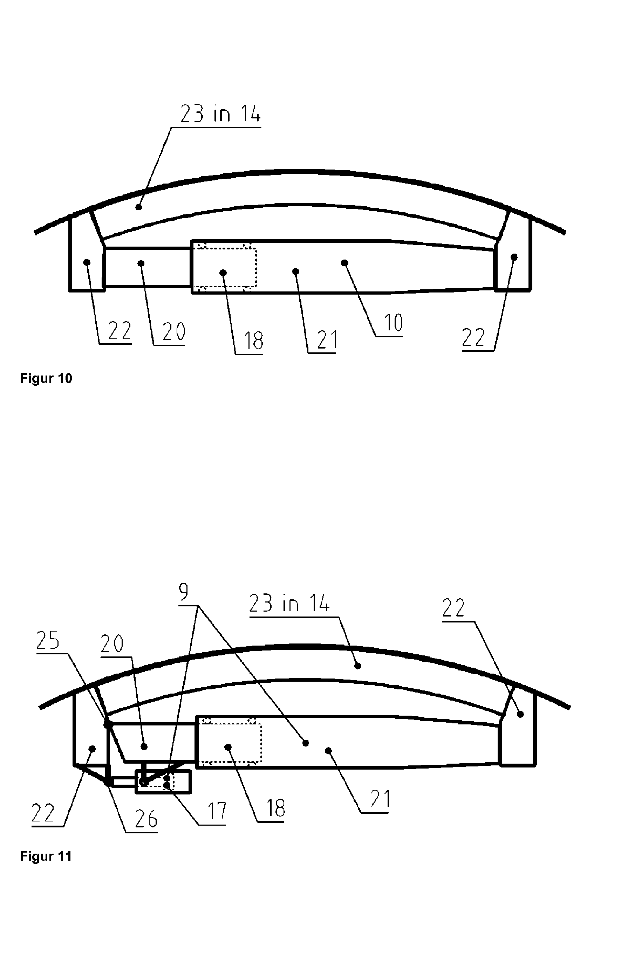

- Fig. 10: Prinzipskizze passive Spantspreize;
- Fig. 11: Prinzipskizze aktive Spantspreize.

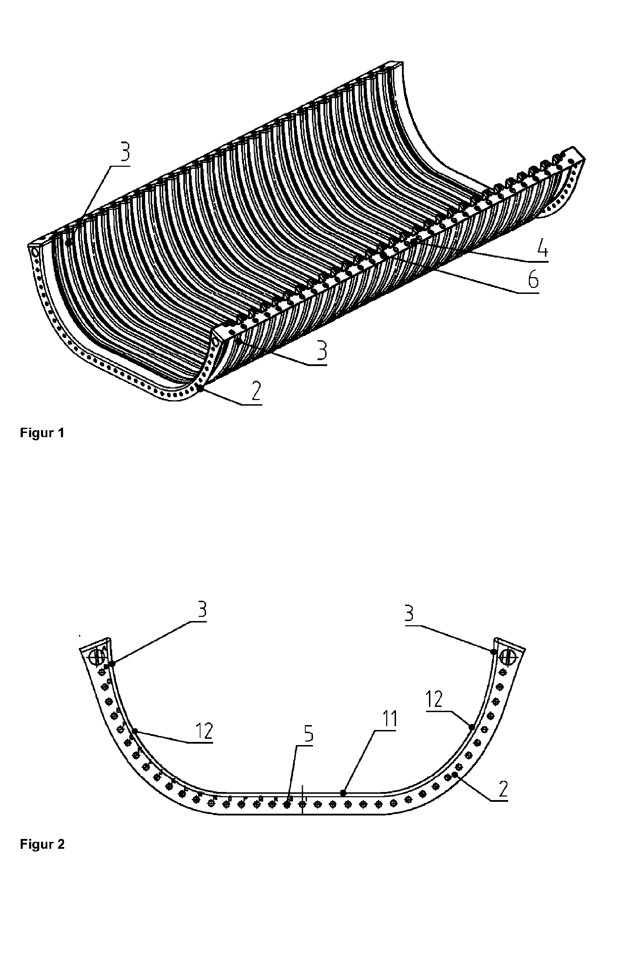

In **Figur 1** ist eine perspektivische Darstellung einer erfindungsgemäßen Komplementärstruktur in der Ausführungsform als Weicher Kasten dargestellt. In Längsrichtung besteht diese aus mehreren alternierend aneinander gereihten und versetzt angeordneten U-Profilen, wobei die Enden der Profilschenkel 3 mit Längsflanschen 4 für die Aufnahme der nicht dargestellten Rumpfschale 14 ausgestaltet sind. Die Profile weisen in Abstimmung mit dem gewählten Lochbild Flankenabstände zwischen 21 mm und 49 mm auf. Weiterhin sind die Längsflansche 4 als Begrenzungen der Komplementärstruktur 1 in Querrichtung zur Einbringung und Aufnahme von Korrekturkräften vorgesehen. Dabei sind die Längsflansche 4 in einem Winkel von je *α_{SW}* = 22° zur Verbindungslinie der Schenkelenden 3 - Sekante - ausgebildet und nehmen den Prüfling über dessen Laschen auf. An den Längsflanschen 4 sind Mittel zur Fixierung 5 der Rumpfschale 14 an der Komplementärstruktur 1 vorgesehen.
Die Begrenzungen des Kastens in Längserstreckung sind als Querflansche 2 ausgebildet. Über die Querflansche 2 ist die Anbindung zum Krafteintrag in den Ersatzquerschnitt, sprich die Komplementärstruktur 1 und die damit verbundene Rumpfschale 14, nachfolgend auch allgemein als Prüfling bezeichnet, ausgestaltet.
Über den Querflansch 2 erfolgt die Einbindung des Weichen Kastens 1 in die Prüfvorrichtung derart, dass eine Druckbeaufschlagung des sich ergebenden Innenraumes der mit der Rumpfschale 14 verbundenen Komplementärstruktur realisierbar ist, um das Druckgefälle bei Flugzeugen in großen Höhen realistisch nachbilden zu können.

In **Figur 2** ist eine Vorderansicht einer Komplementärstruktur 1 in der Ausführungsform als Weicher Kasten 1 dargestellt. Die Querschnittsform des Weichen Kastens 1 wird aus zwei Viertelellipsen 12 gebildet, die an ihrem unteren Hauptscheitelpunkt durch einen horizontalen Abschnitt 11 miteinander verbunden sind. Die Querflansche 2 sind gleichzeitig zur Einleitung und Aufnahme von Prüfkräften in sechs Freiheitsgraden vorgesehen.
Die oberen Scheitel der ellipsoidalen Abschnitte 12 bilden die Schenkel 3, an deren Enden sich die Längsflansche 4 zur Aufnahme der Rumpfschalen 14 befinden. Die dargestellte Ausführungsform zeigt einen Winkel von je *α_{SW}* = 22°. Der Winkel je *α_{SW}* = 22° steht dabei im Zusammenhang mit der Kontur des Prüflings und in einem Verhältnis *b = R_{ref} ·* 2 · sinα*_{pü}* zum Abstand der beiden Schenkel 3 zueinander, wobei R_{ref} = 1978 und α_{pü} = 22,5° sind. Die Indizes "SW", "ref" und "pü" stehen für Sandwich, Referenz (z. B. Werkzeugradius) und den mit Überdruck beaufschlagten Kreisausschnitt.
Allgemein gilt die Beziehung *a_{sw} = α_{pü}* - 0,5°. Als besonders vorteilhaft ist hervorzuheben, dass sich infolge der gezielten Steifigkeitsmodellierung des Druckkastens der Winkel α*_{sw}* während der Belastung nur minimal ändert.

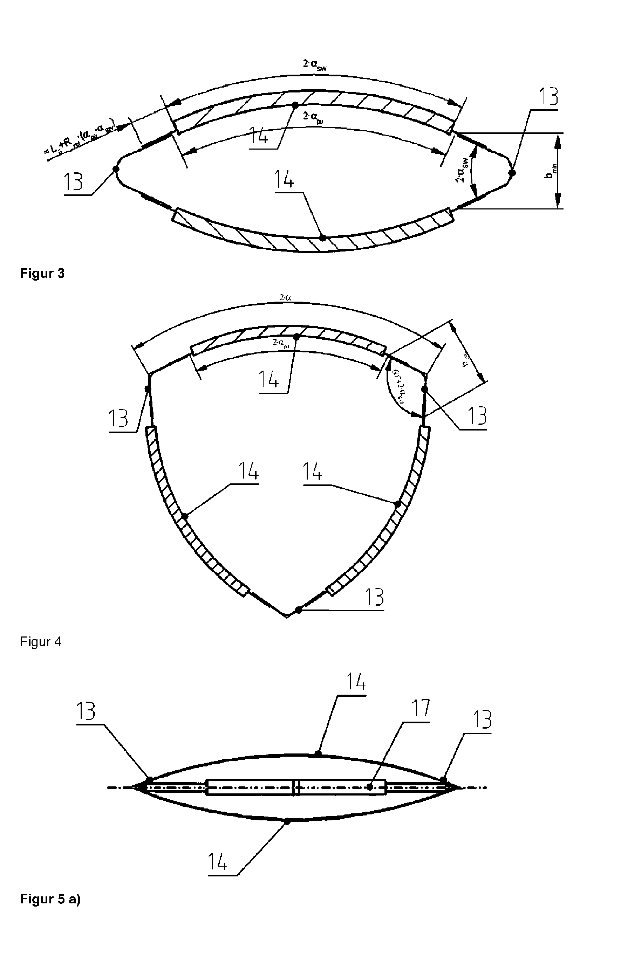

In **Fig. 3** ist schematisch ein Ersatzquerschnitt in der Ausführungsform als Di-Box dargestellt. Dabei werden über zwei Schalenkoppler 13 in der Entsprechung zur Komplementärstruktur 1 beim Weichen Kasten gemäß Fig. 1 und Fig. 2 zwei Rumpfschalen 14 miteinander zu einer Druckröhre verbunden.
Die Winkelabhängigkeiten in Polygon-Boxen sind allgemein wie folgt beschreibbar:
- *α_{SW} = α_{pü}* - 0,5°
- ebene Überlappungslänge *L_{Ü} = f(Nₓ;N_{ψ};N_{xψ};µ₀Einspannscheibe)*
- Öffnungswinkel der Zwischenstücke/Komplemente *β* = 180°- 360°/*N* + 2 *· α_{SW}*

Der minimale Abstand zwischen zwei Rumpfschalen wird für eine Handzugänglichkeit zu Montagezwecken mit *b*ₘᵢₙ = 300 gewählt. Eine größere Weite ist nur bei Montageschwierigkeiten oder räumlich kollidierenden Krafteinleitungen sinnvoll.

In **Fig. 4** ist ein schematischer Querschnitt mit Komplementärstruktur in der Ausführungsform als Tri-Box dargestellt. Hierbei werden über drei Schalenkoppler 13 drei Rumpfschalen 14 miteinander zu einer Druckröhre verbunden. Dieses Prinzip ist letztlich theoretisch erweiterbar bis zum Vollquerschnitt. Der Sekantenöffnungswinkel beträgt bei der Tri-Box 60°. Die Winkelbeziehungen bei der Tri-Box sind adäquat zur allgemeinen Beschreibung wie zu Fig. 3.

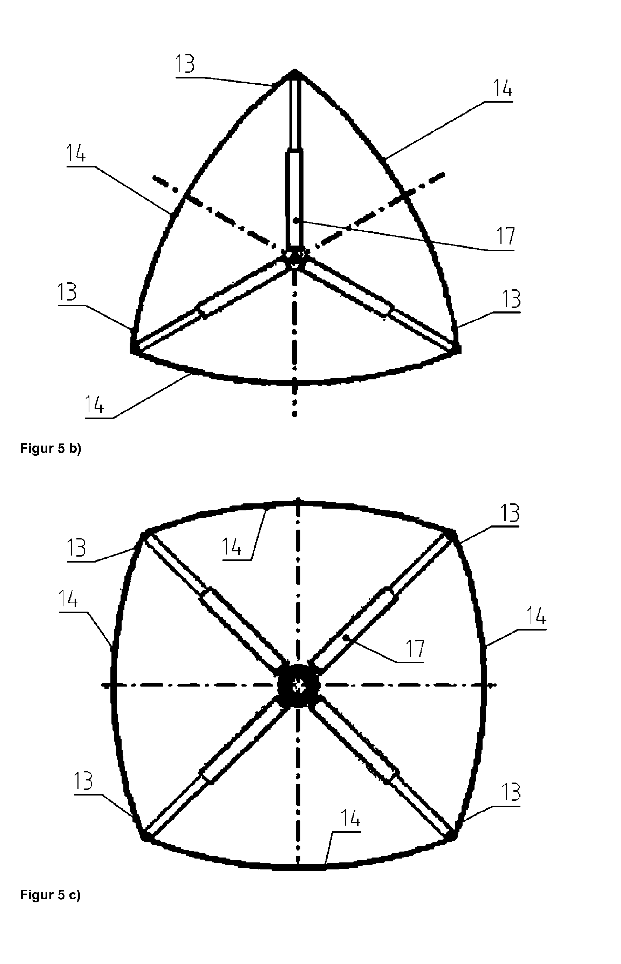

In **Fig. 5a****,** **Fig. 5b und Fig. 5c** sind Ausgestaltungen der Ersatzquerschnitte mit Komplementärstrukturen als Di-, Tri- und Tetra-Box mit der Anordnung von Korrekturaktoren 17 im Inneren der Struktur dargestellt. Die Korrekturaktoren 17 bringen die Korrekturkräfte über die Schalenkoppler 13 auf die Rumpfschalen 14.
Für die in Fig. 5c dargestellte Tetra-Box gelten die gleichen Abhängigkeiten wie für die Tri-Box, jedoch erhöht sich der Sekantenöffnungswinkel von 60° auf 90°.

Die **Figuren 6a und 6b** zeigen Schalenkoppler 13 als Zugplatte in verschiedenen Ausführungen. In Fig. 6a ist ein Schalenkoppler 13 in Y-Form dargestellt. Der Schalenkoppler 13 in Fig. 6b ist im Querschnitt V-förmig ausgebildet und an den freien Schenkelenden über Mittel zur Fixierung 5, beispielsweise mittels der Verbindung über eine Einspannscheibe 7, mit der Rumpfschale 14 verbunden. Am spitzen Winkel greifen nach Fig. 6a Zuganker 16 am Schalenkoppler 13 an, über welche die Korrekturkräfte von außen in die Komplementärstruktur 13 sowie die Rumpfschalen 14 eingeleitet werden. Bei innen liegender Korrekturkrafteinleitung wird der spitze Winkel gemäß Fig. 6b ausgerundet und diskret mit Druckstücken 19, ähnlich denen in einem Druckkasten der D-Box, versehen.
Die **Figuren 6c und 6d** zeigen die Schalenkoppler 13 in der Seitenansicht und der Draufsicht.

In **Fig. 7** ist ein Schalenkoppler 13 als Membran 15 mit Zuganker 16 dargestellt. Die Rumpfschalen 14 sind sowohl mit der Membran 15 als auch mit Zuglaschen als Teil der Zuganker über Mittel zur Fixierung 5 verbunden. Es werden bei dieser differenzierten Ausführung eines Schalenkopplers die Prüfkräfte alleine mittels der Membran übertragen sowie die Korrekturkräfte ausschließlich durch die Zuganker 16 eingeleitet.

In **Fig. 8a** ist eine Einspannscheibe 7 mit pyramidenstumpfartigen Erhebungen 8 im Querschnitt dargestellt. Alternativ sind Rändelungen möglich, diese wurden jedoch nicht dargestellt. Die Einspannscheibe 7 weist dabei korrespondierend zu den Löchern in den Längsflanschen 4 eine konusförmige Gestalt auf, so dass die Einspannscheibe 7 formschlüssig in dem Loch ruht. Die Pyramidenstümpfe 8 sind derart ausgebildet, dass sie den Reibbeiwert deutlich erhöhen und die Flächenpressung infolge Montagekraft ertragbar gering halten. Durch das Einlaminieren der Trichterform 6 wird außerddem die Unstetigkeit der Löcher abgemildert, respektive begrenzt. **Fig. 8b** zeigt eine Einspannscheibe 7 in perspektivischer Darstellung.

In **Fig. 8c** ist beispielhaft ein Ausschnitt für die bevorzugte Ausgestaltung der Mittel zur Fixierung 5 des Weichen Kastens 1 bzw. der Schalenkoppler 13 mit den Rumpfschalen 14 im Querschnitt dargestellt. Die Rumpfschale 14 liegt um die Bohrungen für die Schraubverbindung herum auf der Einspannscheibe 7 auf, welche mit der abgewandten konischen Seite in der trichterförmigen Vertiefung 6 im Längsflansch 4 des Weichen Kastens 1 oder des Schalenkopplers 13 angeordnet ist.

**In** **Fig. 9** wird eine passive Spantspreize 10 im System des Rumpftonnen- und Ersatzquerschnitts gezeigt. Der Querschnitt einer Rumpftonne 24 ist zur Verdeutlichung des Effektes der Verwendung eines Ersatzquerschnittes mit Komplementärstruktur 1 schematisiert dargestellt. Deutlich erkennbar ist, dass das System des Ersatzquerschnittes mit Komplementärstrukturen zu einer signifikanten Verringerung des Platzbedarfes für derartige Prüfungen führen. Dadurch werden Materialprüfungen für große zu untersuchende Strukturen wirtschaftlich effizient möglich. Die angedeutete Komplementärstruktur 1 nimmt den Prüfling, die Rumpfschale 14 mit dem Spant 23, auf und bildet mit diesem den Ersatzquerschnitt. Durch die Abweichung des Ersatzquerschnitts vom Rumpftonnenquerschnitt 24 kommt es geometrisch bedingt zu unerwünschten Nebeneffekten, welche die Repräsentativität der Messungen beeinträchtigen. Um diesen Effekten zu begegnen wird beispielsweise eine passive Spantspreize 10 eingesetzt.

Die passive Spantspreize 10 ist in **Fig. 10** als Zusammenbauskizze abgebildet. Die Spantspreize 10 ist primär ein Mittel zum Ausgleich der lokal exzentrischen Tangentialkrafteinleitung. Ihre Wirkung beruht darauf, ein Verdrehen der Spantköpfe gegeneinander zu verhindern. In der passiven Ausführung muss demzufolge die Biegesteifigkeit der Spantspreize 10 etwa eine Größenordnung höher sein als die des Haut-Spante-Verbundes. Gleichzeitig wird eine leichtgängige, teleskopische Längenänderung durch den Längenausgleich 18 von innerem Schenkel 20 und äußerem Schenkel 21 der passiven Spantspreize 10 ermöglicht. Dehnungsbedingte Änderungen des Bogenmaßes der Rumpfschale 14 in Umfangsrichtung werden somit passiv ausgeglichen. Über einen Spantkopf 22 sind jeweils der innere Schenkel 20 und der äußere Schenkel 21 mit dem Spant 23 verbunden, welcher seinerseits mit der Rumpfschale 14 verbunden ist.

Das Prinzip der aktiven Spantspreize 9 ist in **Fig. 11** dargestellt. Es entspricht einer Erweiterung der passiven Spantspreize 10. Dabei ist der innere Schenkel 20 über ein Gelenk 25 mit dem Spantkopf 22 beweglich verbunden. Zusätzlich ist parallel zum inneren Schenkel 20 ein Korrekturaktor 17 an diesem angeordnet, dessen Kolbenstange an einem Gelenk 26 angreift, welches gleichfalls am Spantkopf 22 angeordnet ist. Kommt es infolge Überdrucks nun zu einer Dehnung in Umfangsrichtung der Rumpfschale, bewegt sich der innere Schenkel 20 aus dem Längenausgleich 18 heraus. Um ein Verdrehen des Spantkopfs 22 tatsächlich und unabhängig von der Biegesteifigkeiten der Spantspreize zu vermeiden, wird nun durch Zug/Druck des Korrekturaktors 17 das Biegemoment winkeltreu oder hyperkorrigiert über die Gelenke 25 und 26 eingestellt.

### LISTE DER BEZUGSZEICHEN

- 1: Komplementärstruktur - "Weicher Druckkasten"
- 2: Querflansch
- 3: Schenkel
- 4: Längsflansche
- 5: Mittel zur Fixierung
- 6: trichterförmige Vertiefung
- 7: Einspannscheibe
- 8: Pyramidenstümpfe
- 9: aktive Spantspreize
- 10: passive Spantspreize
- 11: horizontaler Abschnitt
- 12: ellipsoidaler Abschnitt, Viertelellipsen
- 13: Komplementärstruktur - Schalenkoppler
- 14: Rumpfschale
- 15: Membran
- 16: Zuganker
- 17: Korrekturaktor
- 18: Längenausgleich
- 19: Druckstücke
- 20: innerer Schenkel
- 21: äußerer Schenkel
- 22: Spantkopf
- 23: Spant
- 24: Querschnitt einer Rumpftonne
- 25: Gelenk innerer Schenkel Spantkopf
- 26: Gelenk Korrekturkraftaktor Spantkopf

## Patentansprüche

1. Rumpfschalen Schubflussbeanspruchung Prüfvorrichtung bestehend aus Schalenkopplern (13), Rumpfschalen (14), Mitteln (5) zur Fixierung von Schalenkopplern (13) und Rumpfschalen (14) sowie Mitteln (17) zur Korrekturkrafteinleitung, wobei die Rumpfschalen (14) mit Mitteln (5) zur Fixierung mit Schalenkopplern (13) einen Ersatzquerschnitt für den Rumpf bildend verbunden sind und dass der Ersatzquerschnitt aus N-Rumpfschalen (14) mit N-Schalenkopplern (13) ausgebildet ist, wobei N ganzzahlig und größer als 1 ist.

2. Prüfvorrichtung nach Anspruch 1, **dadurch gekennzeichnet, dass** die Schalenkoppler (13) mit einem V-förmigen Querschnitt ausgebildet sind und dass der V-förmige Querschnitt aus zwei geraden Schenkeln besteht, die durch eine Verrundung miteinander verbunden sind, wobei die Verrundung Kontaktflächen zur Korrekturkrafteinleitung mittels Druckstücken (19) enthält.

3. Prüfvorrichtung nach Anspruch 1, **dadurch gekennzeichnet, dass** die Schalenkoppler (13) mit einem Y-förmigen Querschnitt ausgebildet sind und dass der Y-förmige Querschnitt aus zwei geraden Schenkeln besteht, die durch eine gemeinsame gerade Verlängerung miteinander verbunden sind, wobei die Verlängerung Mittel zur diskreten Korrekturkrafteinleitung über Zuganker (16) enthält.

4. Prüfvorrichtung nach einem der Ansprüche 1 bis 3, **dadurch gekennzeichnet, dass** der Ersatzquerschnitt aus zwei, drei oder vier Rumpfschalen (14) und der korrespondierenden Anzahl von Schalenkopplern (13) besteht.

5. Prüfvorrichtung nach einem der Ansprüche 1 bis 4, **dadurch gekennzeichnet, dass** die Mittel zur Fixierung (5) der Rumpfschale (14) an den Schalenkopplern (13) aus einer trichterförmigen Vertiefung (6) und einer korrespondierend dazu ausgebildeten Einspannscheibe (7) sowie aus Schrauben und Muttern bestehen, wobei an der der Rumpfschale (14) zugewandten Oberseite der Einspannscheibe (7) eine Riffelung aus Pyramidenstümpfen (8) vorgesehen ist.

6. Prüfvorrichtung nach einem der Ansprüche 1 bis 5, **dadurch gekennzeichnet, dass** die Schalenkoppler (13) aus glasfaserverstärktem Epoxidharz ausgebildet sind.

7. Prüfvorrichtung nach einem der Ansprüche 1 bis 6, **dadurch gekennzeichnet, dass** die Rumpfschalen (14) als spantverstärkte Rumpfschalen ausgebildet sind und dass eine passive Spantspreize (10) vorgesehen ist, die einen inneren und äußeren Schenkel (20, 21), verbunden über einen Längenausgleich (18), aufweist, wobei die passiven Spantspreizen (10) derart ausgebildet sind, dass die lokal exzentrische Tangentialkrafteinleitung ausgleichbar ist, wobei der relative Winkel zwischen den Spantköpfen unter Belastung der Rumpfschale annähernd konstant bleibt.

8. Prüfvorrichtung nach einem der Ansprüche 1 bis 6, **dadurch gekennzeichnet, dass** die Rumpfschalen (14) als spantverstärkte Rumpfschalen ausgebildet sind und dass eine aktive Spantspreize (9) vorgesehen ist, die einen inneren und äußeren Schenkel (20, 21), verbunden über einen Längenausgleich (18), aufweist und dass weiterhin der innere Schenkel (20) über ein Gelenk (25) mit dem Spantkopf (22) verbunden ist und dass ein Korrekturaktor (17) am inneren Schenkel (20) parallel angeordnet und mit der Kolbenstange über ein Gelenk (26) mit dem Spantkopf (22) derart verbunden ist, dass die lokal exzentrische Tangentialkrafteinleitung ausgleichbar ist und der relative Winkel zwischen den Spantköpfen (22) unter Belastung der Rumpfschale (14) konstant bleibt oder hyperkorrigiert wird, wobei entweder der Winkel oder das Biegemoment als Regelgröße genutzt wird und die jeweils abhängige Komponente sich einstellt.

## Claims

1. Shear flow stress testing device for fuselage shells consisting of shell couplers (13), fuselage shells (14), means (5) for the fixing of shell couplers (13) and fuselage shells (14) and means (17) for the introduction of corrective force, whereby the fuselage shells (14) are connected with means (5) for fixing to shell couplers (13) forming an equivalent cross section for the fuselage and that the equivalent cross section is formed from Nfuselage shells (14) with N-shell couplers (13), whereby N is a whole number and greater than 1.

2. Testing device in accordance with Claim 1, **characterised in that** the shell couplers (13) are designed with a V-shaped cross section and that the V-shaped cross section consists of two straight side pieces which are connected to one another by means of a rounding, whereby the rounding contains contact surfaces for the introduction of corrective force by means of pressure pieces (19).

3. Testing device in accordance with Claim 1, **characterised in that** the shell couplers (13) are designed with a Y-shaped cross section and that the Y-shaped cross section consists of two straight side pieces which are connected to one another by means of a common straight elongation, whereby the elongation contains means for the discrete introduction of corrective force by means of tension rods (16).

4. Testing device in accordance with one of Claims 1 to 3, **characterised in that** the equivalent cross section consists of two, three or four fuselage shells (14) and the corresponding number of shell couplers (13).

5. Testing device in accordance with one of Claims 1 to 4, **characterised in that** the means for the fixing (5) of the fuselage shell (14) to the shell couplers (13) consist of a funnel-shaped recess (6) and a clamping washer (7) designed to correspond to this and also of bolts and nuts, whereby on the upper side of the clamping washer (7) facing the fuselage shell (14) fluting made from truncated pyramids (8) is provided.

6. Testing device in accordance with one of Claims 1 to 5, **characterised in that** the shell couplers (13) are constructed from glass fibre-reinforced epoxy resin.

7. Testing device in accordance with one of Claims 1 to 6, **characterised in that** the fuselage shells (14) are designed as frame-reinforced fuselage shells and that a passive frame brace (10) is provided which has an inner and outer side piece (20, 21), connected via a length compensation (18), whereby the passive frame braces (10) are designed in such a way that the locally eccentric introduction of tangential force is capable of being compensated, whereby the relative angle between the frame heads remains approximately constant under the fuselage shell load.

8. Testing device in accordance with one of Claims 1 to 6, **characterised in that** the fuselage shells (14) are designed as frame-reinforced fuselage shells and that an active frame brace (9) is provided which has an inner and an outer side piece (20, 21), connected via a length compensation (18), and that in addition the inner side piece (20) is connected via a hinge (25) to the frame head (22) and that a correction actuator (17) is arranged in parallel on the inner side piece (20) and with the piston rod connected via a hinge (26) to the frame head (22) in such a way that the locally eccentric introduction of tangential force is capable of being compensated and the relative angle between the frame heads (22) either remains constant or is hypercorrected under the fuselage shell (14) load, whereby either the angle or the bending moment is used as a variable and the dependent component in each case ensues.

## Revendications

1. Dispositif de contrôle de la contrainte d'écoulement plastique par cisaillement des coques de fuselage comprenant des coupleurs de coques (13), des coques de fuselage (14), des moyens (5) de fixation des coupleurs de coques (13) et des coques de fuselages (14) ainsi que des moyens (17) pour l'application d'une force de correction ; les coques de fuselage (14) sont maintenues en formant une section de remplacement avec le fuselage par des moyens (5) de fixation des coupleurs de coques (13), et la section de remplacement est formée de N coques de fuselages (14) avec N coupleurs de coques (13), N étant un entier supérieur à 1.

2. Dispositif de contrôle selon la revendication 1, **caractérisé en ce que** les coupleurs de coques (13) sont conçus avec une section en forme de V et que la section en forme de V se compose de deux branches droites reliées entre elles par un arrondi ; l'arrondi comprend des surfaces de contact pour l'application d'une force de correction au moyen de pièces de pression (19).

3. Dispositif de contrôle selon la revendication 1, **caractérisé en ce que** les coupleurs de coques (13) sont conçus avec une section en forme de Y et que la section en forme de Y se compose de deux branches droites reliées entre elles par un prolongement droit commun ; le prolongement comprend des moyens pour l'application discrète d'une force de correction au moyen d'ancres (16).

4. Dispositif de contrôle selon l'une des revendications 1 à 3, **caractérisé en ce que** la section de remplacement se compose de deux, trois ou quatre coques de fuselage (14) et du nombre correspondant de coupleurs de coques (13).

5. Dispositif de contrôle selon l'une des revendications 1 à 4, **caractérisé en ce que** les moyens de fixation (5) des coques de fuselage (14) aux coupleurs de coques (13) se composent d'un renfoncement en forme d'entonnoir (6) et d'une vis de serrage (7) conçue en conséquence, ainsi que de vis et d'écrous ; une cannelure de pyramides tronquées (8) est prévue sur la face supérieure de la vis de serrage (7) tournée vers la coque de fuselage (14).

6. Dispositif de contrôle selon l'une des revendications 1 à 5, **caractérisé en ce que** les coupleurs de coques (13) sont conçus en résine époxyde renforcée par des fibres de verre.

7. Dispositif de contrôle selon l'une des revendications 1 à 6, **caractérisé en ce que** les coques de fuselage (14) sont conçues comme des coques de fuselage à couple renforcé et qu'un écarteur de couple passif (10) est prévu ; celui-ci présente une branche intérieure et une branche extérieure (20, 21) reliées par une compensation de longueur (18) et les écarteurs de couple passifs (10) sont conçus de façon que l'application d'une force tangentielle excentrique locale soit compensable ; l'angle relatif entre les têtes de couple sous la contrainte des coques de fuselage reste à peu près constant.

8. Dispositif de contrôle selon l'une des revendications 1 à 6, **caractérisé en ce que** les coques de fuselage (14) sont conçues comme des coques de fuselage à couple renforcé et qu'un écarteur de couple actif (9) est prévu ; celui-ci présente une branche intérieure et une branche extérieure (20, 21) reliées par une compensation de longueur (18), que la branche intérieure (20) est en outre reliée à la tête de couple (22) par une articulation (25) et qu'un acteur de correction (17) est disposé parallèlement sur la branche intérieure (20) et relié à la tige de piston par une articulation (26) avec la tête de couple (22) de façon que la force tangentielle excentrique locale soit compensable et que l'angle relatif entre les têtes de couple (22) sous la contrainte des coques de fuselage (14) reste constant ou soit hypercorrigé ; soit l'angle soit le couple de flexion est utilisé comme grandeur de réglage et le composant dépendant s'adapte.
